(19) Europäisches Patentamt
European Patent Office
Office européen des brevets

(11) **EP 1 708 898 B1**

(12) **EUROPÄISCHE PATENTSCHRIFT**

(45) Veröffentlichungstag und Bekanntmachung des Hinweises auf die Patenterteilung:
**04.03.2009 Patentblatt 2009/10**

(21) Anmeldenummer: **05707887.5**

(22) Anmeldetag: **29.01.2005**

(51) Int Cl.:
**B60G 17/015** $^{(2006.01)}$       **B60G 17/04** $^{(2006.01)}$
**B60G 15/12** $^{(2006.01)}$       **B62D 55/112** $^{(2006.01)}$
**B62D 55/30** $^{(2006.01)}$

(86) Internationale Anmeldenummer:
**PCT/EP2005/050376**

(87) Internationale Veröffentlichungsnummer:
**WO 2005/073000 (11.08.2005 Gazette 2005/32)**

(54) **KETTENFAHRZEUG UND VERFAHREN ZUM BEEINFLUSSEN DER KETTENSPANNUNG EINES KETTENFAHRZEUGES**

TRACK-LAYING VEHICLE AND METHOD FOR INFLUENCING THE CHAIN TENSION OF A TRACK-LAYING VEHICLE

VEHICULE CHENILLE ET PROCEDE POUR INFLUER SUR LA TENSION DE LA CHENILLE D'UN VEHICULE CHENILLE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.01.2004 EP 04405061**

(43) Veröffentlichungstag der Anmeldung:
**11.10.2006 Patentblatt 2006/41**

(73) Patentinhaber:
• **Curtiss-Wright Antriebstechnik GmbH**
**8212 Neuhausen am Rheinfall (CH)**
• **Kleiber, Michael**
**8447 Dachsen (CH)**

(72) Erfinder:
• **GABRIEL, Stefan**
**CH-8212 Neuhausen am Rheinfall (CH)**
• **ZUELLIG, Roland**
**CH-8215 Hallau (CH)**
• **BEER, Hanspeter**
**CH-8222 Beringen (CH)**
• **VAN DEN BERG, Michael**
**79787 Lauchringen (DE)**
• **WALCH, Christian**
**CH-8413 Neftenbach (CH)**
• **KLEIBER, Michael**
**CH-8447 Dachsen (CH)**

(74) Vertreter: **Dr. Graf & Partner**
**Herrenacker 15**
**Postfach 518**
**8200 Schaffhausen (CH)**

(56) Entgegenhaltungen:
DE-A1- 19 830 506       DE-B- 1 091 905
DE-C- 414 467       FR-A- 1 514 404

EP 1 708 898 B1

**Beschreibung**

Die Erfindung betrifft ein Kettenfahrzeug mit hydropneumatischer Federungsvorrichtung gemäss dem Oberbegriff von Anspruch 1. Die Erfindung betrifft weiter ein Verfahren zum Beeinflussen der Kettenspannung eines Kettenfahrzeuges gemäss dem Oberbegriff von Anspruch 8.

Eine hydropneumatische Federung besteht im Allgemeinen aus einem Gasvolumen und einem Flüssigkeitsvolumen, die über einen Trennkolben in einer festen Gehäusekombination aufgenommen sind. Die hydropneumatische Federungsvorrichtung besteht aus drei Kammern. Eine erste Kammer ist für die Aufnahme von Flüssigkeitsvolumen bestimmt. Dieses Flüssigkeitsvolumen ist veränderbar, indem Gehäuseteile in irgendeiner Art und Weise zusammengeschoben oder auseinandergeschoben werden. Eine zweite Kammer ist mit der ersten Kammer über eine Drossel fluidleitend verbunden. Die zweite Kammer ist für die Aufnahme bzw. Abgabe der Flüssigkeit von bzw. an die erste Kammer vorgesehen. Das Flüssigkeitsvolumen der ersten Kammer und der zweiten Kammer zusammen ist konstant. Die dritte Kammer ist mit einem komprimierbaren Medium, wie zum Beispiel Gas, gefüllt. Die dritte Kammer ist durch einen beweglichen Kolben von der zweiten Kammer getrennt.

Die hydropneumatische Federungsvorrichtung ist beispielsweise einerseits am Rahmen eines Fahrzeuges und andererseits an einer beweglichen Achse oder einer beweglichen Radaufhängung befestigt. Eine Bewegung zwischen den beiden Befestigungspunkten bewirkt eine Volumenänderung der ersten Kammer. Dadurch wird das Medium in der dritten Kammer über die zweite Kammer komprimiert bzw. dekomprimiert. Dies bewirkt eine Ein- oder Ausfederung. Die Bewegung wird über die Drossel zwischen der ersten Kammer und der zweiten Kammer gedämpft. Eine derartige hydropneumatische Federung wird auch als Hydropfeder bezeichnet.

Nachteilig an Kettenfahrzeugen, beispielsweise das in der Druckschrift DE 1 091 905 offenbarte Kettenfahrzeug, und insbesondere nachteilig an mit Hydropfedern ausgestatteten Kettenfahrzeugen ist die Tatsache, dass sich die Kettenspannung, das Fahrverhalten und/oder die Fahrzeughöhe des Kettenfahrzeuges verändern können. Diese Effekte treten insbesondere bei geländegängigen Fahrzeugen auf, bei welchen die Hydropfedern auf Grund der Unebenheiten des Untergrundes einer besonders starken Belastung ausgesetzt sind. Die Veränderung der Kettspannung kann bei Überhöhung der Kettspannung einen erhöhten Verschleiss der Kette zur Folge haben, oder bei zu loser Kette die Ursache für einen Kettenabwurf oder eine Nichtlenkbarkeit bzw. eine Nichtbremsbarkeit des Fahrzeuges sein.

Es ist daher die Aufgabe der vorliegenden Erfindung ein Kettenfahrzeug mit hydropneumatischer Federungsvorrichtung zu bauen, inklusive einem Kontroll-Verfahren zum Beeinflussen der Kettenspannung eines Kettenfahrzeuges, um einen zuverlässigeren Betrieb zu ermöglichen.

Diese Aufgabe wird gelöst mit einem Kettenfahrzeug aufweisend die Merkmale von Anspruch 1. Die Aufgabe wird weiter gelöst mit einem Verfahren zum Beeinflussen der Spannung der Kette eines Kettenfahrzeuges aufweisend die Merkmale von Anspruch 8. Vorteilhafte Ausführungsformen ergeben sich aus den Unteransprüchen.

Die Aufgabe wird insbesondere gelöst mit einem Kettenfahrzeug umfassend eine Mehrzahl von Rädern an welchen eine umlaufende Kette anliegt, wobei zumindest eines der Räder über eine hydropneumatische Federungsvorrichtung, mit zumindest einer Hydropfeder und einer Gaskammer, federnd mit einem Laufwerkträger verbunden sind, wobei die Gaskammer über ein Steuerventil strömungstechnisch mit einer Dosiervorrichtung verbunden ist, sowie umfassend einen Sensor zur Bestimmung eines Wertes des Gases in der Gaskammer wie Temperatur und/oder Druck, sowie umfassend eine Ansteuerungsvorrichtung, wobei die Ansteuerungsvorrichtung derart ausgestaltet ist, dass diese den Messwert des Sensors erfasst, und basierend auf diesem Messwert die Dosiervorrichtung und das Steuerventil derart ansteuert, dass der Gaskammer ein Kompensationsvolumen zu- oder abführbar ist, um derart die Spannung der Kette zu beeinflussen.

Die Aufgabe wird zudem insbesondere gelöst mit einem Verfahren zum Beeinflussen der Spannung einer umlaufenden Kette eines Kettenfahrzeuges, wobei die umlaufende Kette an Rädern anliegt, und wobei die Räder über eine hydropneumatische Federungsvorrichtung umfassend eine Hydropfeder mit einer Gaskammer mit einem Laufwerkträger verbunden sind, und wobei zumindest eine Hydropfeder, strömungstechnisch mit einer Dosiervorrichtung verbindbar ist, und wobei ein Wert des Gases in der Gaskammer wie die Temperatur und/oder der Druck gemessen wird, und wobei in Abhängigkeit dieses gemessenen Wertes ein Kompensationsvolumen der Gaskammer zu- oder abgeführt wird.

Unter Gas wird nachfolgend auch ein komprimierbares Fluid verstanden, welches bezüglich Temperatur- und Druckverhalten gasähnliche Eigenschaften aufweist, beispielsweise eine komprimierbare Flüssigkeit. Unter Gaskammer wird ein Hohlraum verstanden, welcher ein Gas oder die vorhin genannte komprimierbare Flüssigkeit enthalten kann.

Unter Kettenfahrzeug wird ein Kraftfahrzeug mit umlaufender Kette verstanden, beispielsweise ein Panzer. Das Kettenfahrzeug weist zum Antrieb vorzugsweise einen Verbrennungsmotor auf.

Das erfindungsgemässe Kettenfahrzeug bzw. das Verfahren zum Beeinflussen der Kettenspannung weist insbesondere den Vorteil auf, dass die Kettenspannung im Ruhezustand temperaturunabhängig konstant oder im Wesentlichen konstant gehalten werden kann. Beim Fahren des Kettenfahrzeuges variiert die Kettenspannung natürlich aufgrund der auftretenden Bewegungen und Schläge. Hier ist eine Kompensation der temperaturbedingten Effekte der Kettenspannung besonders wichtig, um einen schnellen Verschleiss der Kette oder einen Kettenabwurf zu vermeiden.

In einer bevorzugten Ausführungsform weist das Kettenfahrzeug in einem Grundzustand, z.B. in Ruhelage, unabhängig von Temperaturveränderungen im wesentlichen dieselbe Kettenspannung auf, weil die durch eine Temperaturveränderung bedingte Volumenveränderung des Gases in der Gaskammer der Hydropfeder durch ein Kompensationsvolumen kompensiert wird, indem dieses Kompensationsvolumen der Gaskammer mit Hilfe einer Dosiervorrichtung entweder zu- oder abgeführt wird.

Das Kompensationsvolumen kann beispielsweise in regelmässigen zeitlichen Abständen, oder beim Überschreiten einer vorgebbaren Temperaturänderung, einer vorgegebenen Temperatur, einer vorgegebenen Länge, oder eines vorgegebenen Drucks der Gaskammer zu- bzw. abgeführt werden.

Beim Kettenfahrzeug kann das Kompensationsvolumen in definierten oder beliebigen Fahrtzuständen der Gaskammer zu- bzw. abgeführt werden, beispielsweise bei Fahrzeugstillstand, bei Fahrt auf ebener Strasse oder bei Fahrt im Gelände. In einer bevorzugten Ausführungsform weist die Hydropfeder in Kombination mit einem Fahrzeug in einem Grundzustand unabhängig von Temperaturveränderungen im Wesentlichen dieselbe Länge auf. Unter einem Grundzustand des Fahrzeuges kann beispielsweise eine definierte Lage oder eine definierte Höhe des Fahrzeuges ab Boden, eine definierte Länge der Hydropfeder oder ein definierter Druck in der Hydropfeder verstanden werden, wobei sich das Fahrzeug bei diesem Grundzustand vorzugsweise im Stillstand befindet.

Das erfindungsgemässe Kettenfahrzeug weist zudem den Vorteil auf, dass wenige robuste elektrische, elektronische und mechanische Komponenten erforderlich sind, sodass das erfindungsgemässe Kettenfahrzeug insbesondere für rauen Einsatz, beispielsweise auch für militärische Anwendungen, geeignet ist.

Das erfindungsgemässe Kettenfahrzeug weist den Vorteil auf, dass die Kette geringeren Spannungen ausgesetzt ist, sodass die Kette aus leichterem Material gefertigt werden kann, beziehungsweise als Leichtbaukette ausgestaltet sein kann. Vergleichsweise zu z.B. Drehstablösungen für die Federung von Kettenfahrzeugen können Hydropfedern leichter ausgebildet werden, sodass der gesamte Laufwerkträger mit Kette ein leichteres Gewicht aufweist. Dies ermöglicht eine erhebliche Gewichtsreduktion des Kettenfahrzeuges beziehungsweise eine Gewichtsoptimierung. Dadurch ist es möglich Kettenfahrzeuge mit relativ geringem Gewicht zu bilden, sodass diese beispielsweise auch per Flugzeug transportiert werden können, was für einen weltweiten, schnellen Einsatz der Kettenfahrzeuge von besonderer Bedeutung ist. Zudem weist das Kettenfahrzeug eine einen höheren Fahrkomfort auf.

In einer einfachen Ausführungsform sind nur ein Temperatursensor zur Bestimmung der Temperatur des Gases in der Gaskammer der Hydropfeder, eine Dosiervorrichtung sowie eine Ansteuerungsvorrichtung erforderlich. In einer weiteren einfachen Ausführungsform sind nur ein Drucksensor zum Messen des Gasdruckes in der Gaskammer der Hydropfeder, eine

Dosiervorrichtung sowie eine Ansteuerungsvorrichtung erforderlich. In einer weiteren vorteilhaften Ausführungsform ist zudem ein Drucksensor zum Messen des Gasdruckes in der Dosiervorrichtung erforderlich. Diese Ausführungsformen weisen den Vorteil auf, dass sie sehr robust, einfach, zuverlässig und reparaturfreundlich sind, da sowohl der Temperatur- als auch der Drucksensor äusserst zuverlässige Standardkomponenten sind. Zudem kann auch die Ansteuervorrichtung einfach ausgestaltet sein, da zur Ansteuerung der Dosiervorrichtung kein komplexer Rechner erforderlich ist.

In einer weiteren vorteilhaften Ausführungsform wird die Länge der Hydropfeder sowie der in der Gaskammer der Hydropfeder anliegende Druck gemessen, und basierend auf einem vorgegebenen Zusammenhang zwischen zwischen Druck und Länge ausgehend von der Länge der Hydropfeder ein Solldruckwert ermittelt, und der Gaskammer das Gas zu- oder abgeführt, bis der Druck in der Hydropfeder dem Solldruckwert entspricht. Diese Ausführungsform weist den Vorteil auf, dass die Hydropfeder temperaturunabhängig im Wesentlichen denselben Zusammenhang zwischen Druck und Länge aufweist.

Die Anordnung zur Versorgung der Hydropfeder mit dem Kompensationsvolumen kann auf unterschiedliche Weise ausgestaltet sein. So kann jede Hydropfeder mit einer separaten Dosiervorrichtung verbunden sein. Es können jedoch auch eine Mehrzahl von Hydropfedern über Steuerventile strömungstechnisch mit einer einzigen Dosiervorrichtung verbunden sein, wobei über eine entsprechende Ansteuerung der Steuerventile den Hydropfedern einzeln nacheinander oder zeitgleich ein Kompensationsvolumen zuführbar ist.

Die Kettenfahrzeuge weisen eine von einem Kettenlaufwerk getragene, umlaufende Kette auf, wobei die Hydropfedern derart angeordnet sind, dass diese die Kettenspannung beeinflussen. Bevorzugt sind die Hydropfedern beim Kettenfahrzeug einerseits mit einem Laufwerkträger bzw. mit einer Fahrzeugwanne und andererseits mit einer Ketten-Laufrolle bzw. mit deren Aufhängung verbunden, sodass jede Hydropfeder eine federnde Verbindung zwischen der Laufrolle bzw. der Kette und der Fahrzeugwanne bildet. Die Hydropfedern werden vorzugsweise derart mit Kompensationsvolumen versorgt, dass die Kette während dem Betrieb des Kettenfahrzeuges bezüglich eines Grundzustands, beispielsweise Stillstand, eine im Wesentlichen konstante Spannung aufweist. Wird ein Kettenfahrzeug bei tiefer Aussentemperatur in Betrieb genommen, beispielsweise frühmorgens, so weisen die Hydropfedern eine verkürzte Länge auf, auf Grund der tiefen Temperatur des Gases in der Gaskammer. Die Kette weist daher eine zu tiefe Spannung auf. Durch das Einbringen eines Kompensationsvolumens in die Gaskammer der Hydropfedern kann nun, beispielsweise bevor das Kettenfahrzeug in Bewegung gesetzt wird, die Spannung der Kette auf einen vorbestimmten Wert erhöht werden. Während der Fahrt des Kettenfahrzeuges erwärmt sich das Gas in der Gaskammer aufgrund der Reibung bei ständiger Aus- und Einfederung der Hydropfeder, was durch dessen Ausdehnung eine erhöhte Kettenspannung zur Folge hat. Durch das Abführen eines Kompensationsvolumens aus der Gaskammer der Hydropfedern kann nun, beispielsweise bei Stillstand des Kettfahrzeuges, die Spannung der Kette reduziert werden. Im einfachsten Fall genügt es die Temperatur, Länge oder den Druck des Gases in der Gaskammer zu messen, um daraus das Kompensationsvolumen zu berechnen. Das Kompensationsvolumen kann, weil Temperatur oder Druck jederzeit, zum Beispiel auch während der Fahrt durch Mittelwertbildung, messbar sind, somit auch während der Fahrt berechnet werden, und der Gaskammer der Hydropfeder kann auch während der Fahrt des Kettfahrzeuges, insbesondere bei einer Fahrt mit geringen Federbewegungen der Hydropfeder wie beispielsweise auf ebener Strasse, ein Kompensationsvolumen zu- bzw. abgeführt werden. Da beim Kettenfahrzeug der Druck des Gases in der Gaskammer einer Hydropfeder in einer Beziehung zur Spannung der Kette steht, ist es im einfachsten Falle möglich nur den Druck dieses Gases zu messen, aus diesem gemessenen Wert ein Kompensationsvolumen zu berechnen oder zu erzeugen, und dieses daraufhin der Gaskammer zu- bzw. abzuführen, um eine im Wesentlichen konstante Kettenspannung zu erlangen.

Noch eine weitere vorteilhafte Ausführungsform weist ausserdem eine direkte oder indirekte Lagemessung der Hydroplänge auf. Zusammen mit einer Druckmessung in der Gaskammer der Hydropfeder kann ermittelt werden, ob die ermittelte Lage mit dem gemessenen Druck entsprechend der vorgegebenen Kennlinie der Hydropfeder korreliert. Bei einer Abweichung zur vorgegebenen Kennlinie wird Kompensationsvolumen der Gaskammer solange zu- bzw. abgeführt, bis die vorgegebene Kennlinie wieder erreicht wird.

In einer weiteren vorteilhaften Ausführungsform ist zudem ein Drucksensor zum Messen des Gasdruckes in der Dosiervorrichtung erforderlich.

In einer bevorzugten Ausgestaltung ist die Dosiervorrichtung als Dosierzylinder mit einem verschiebbaren Kolben und einem Dosiervolumen ausgebildet. In einer weiteren vorteilhaften Ausführung kann die Dosierung des Kompensationsvolumens auch über die Funktion einer Membran oder Blase erfolgen, wie sie z.B. in Druckspeichern benutzt werden. Die Dosiervorrichtung könnte beispielsweise auch als Dosierpumpe ausgestaltet sein.

Die Erfindung wird nachfolgend an Hand mehrerer Ausführungsbeispiele im Detail beschrieben. Es zeigen:

Figur 1    eine schematische Ansicht einer Hydropfeder mit Dosierzylinder und Ansteuerungsvorrichtung;

Figur 2    schematisch eine weitere Ausführungsform eines Dosierzylinders;

Figur 3    eine schematische Ansicht einer hydropneumatischen Federungsvorrichtung eines Fahrzeuges mit einer Mehrzahl von Einzelrädern, welchen je eine Hydropfeder zugeordnet ist;

Figur 4    eine schematische Ansicht eines Kettenfahrzeuges mit zwei Hydropfedern;

Figur 5    schematisch die Ansteuerung von zwei getrennten Federmodulen mit Hydropfedern;

Figur 6    eine schematische Draufsicht auf ein Federmodul eines Kettenfahrzeuges mit zwei ansteuerbaren Hydropfedern;

Figur 7    ein Ausführungsbeispiel einer Hydropfeder.

Fig. 8a    der Zusammenhang zwischen Länge einer Hydropfeder und Druck in deren Gaskammer bei unterschiedlichen Temperaturen.

Fig. 8b    ein vorgegebener Zusammenhang zwischen Länge der Hydropfeder und Druck in deren Gaskammer.

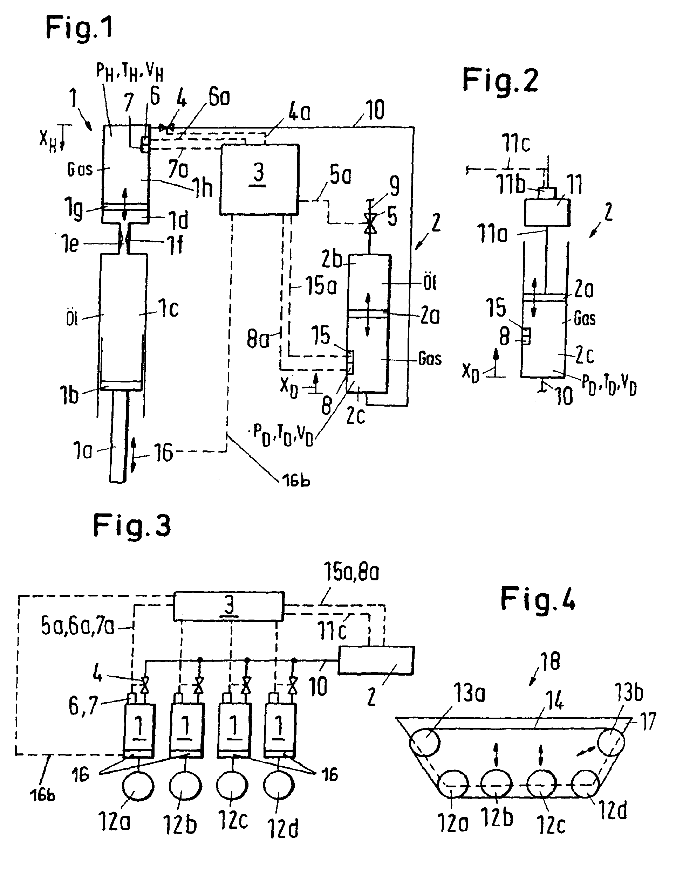

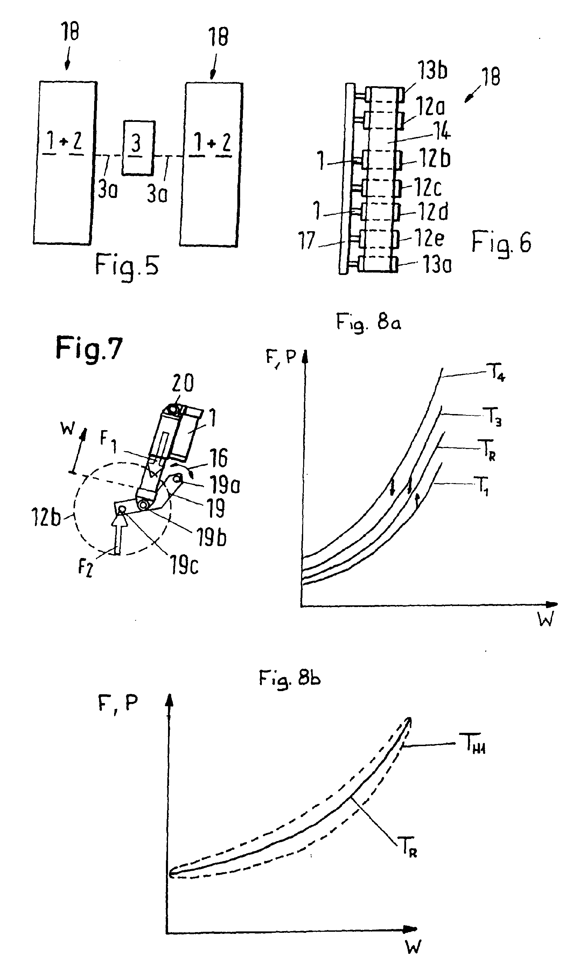

Die in Figur 1 schematisch dargestellte hydropneumatische Federungsvorrichtung umfasst eine Hydropfeder 1, welche über ein Steuerventil 4 und eine Leitung 10 strömungstechnisch mit einem Dosierzylinder 2 verbunden ist. Die vereinfacht dargestellte Hydropfeder 1 umfasst ein vertikal verschiebbares Verbindungsmittel 1a, an dessen unterem Ende ein nicht dargestelltes Rad bzw. Radhalterung befestigt ist. Das Verbindungsmittel 1a ist fest mit einem verschiebbar gelagerten Kolben 1b mit Gehäuseteil verbunden, wobei der Kolben 1b mit Gehäuseteil sowie das feste Gehäuse der Hydropfeder 1 ein Flüssigkeitsvolumen begrenzen, welches ein erstes Teilvolumen 1c sowie ein zweites Teilvolumen 1d aufweist. Das erste Teilvolumen 1c wird auch als erste Kammer, das zweite Teilvolumen 1d als zweite Kammer bezeichnet. Das erste und zweite Teilvolumen 1c, 1d sind über eine Ausgleichsleitung 1e mit Drossel 1f Fluid leitend verbunden. Das Flüssigkeitsvolumen ist vorzugsweise mit Öl gefüllt. Ein Gasvolumen 1h, auch als dritte Kammer bezeichnet, ist durch das feste Gehäuse der Hydropfeder 1 und einem Trennkolben 1g begrenzt, wobei der verschiebbare Trennkolben 1g das zweite Teilvolumen 1d sowie die Gaskammer 1h begrenzt. Im dargestellten Ausführungsbeispiel ist die Hydropfeder 1 mit einem Temperatursensor 6 sowie mit einem Drucksensor 7 versehen, um in der Gaskammer 1h die Temperatur sowie den Druck des sich darin befindlichen Gases zu messen. Beide Sensoren 6,7 sind über Signalleitungen 6a, 7a mit einer Ansteuerungsvorrichtung 3 verbunden. Es ist eine Vielzahl von Ausführungsformen bekannt um mit dem Temperatursensor 6 die Temperatur des Gases zu messen, wobei die Temperatur beispielsweise direkt mit einem innerhalb der Gaskammer 1h angeordneten Sensor gemessen werden kann, oder beispielsweise auch indirekt, indem nur die Gehäusetemperatur an geeigneter Stelle der Hydropfeder 1 gemessen wird. Der Dosierzylinder 2 umfasst einen verschiebbar gelagerten Dosierkolben 2a, welcher eine Ölkammer 2b von einem mit Gas gefüllten Dosiervolumen 2c trennt. Die Ölkammer 2b ist über ein Steuerventil 5 mit einer Öldruckleitung 9 verbunden. Im dargestellten Ausführungsbeispiel ist der Dosierzylinder 2 mit einem Drucksensor 8 sowie einem Temperatursensor 15 versehen, um im Dosierzylinder 2 die Temperatur sowie den Druck des sich darin befindlichen Gases zu messen. Der Druck kann, beispielsweise während der Fahrt des Kettenfahrzeuges, stark schwanken. Um trotzdem den Druckwert zuverlässig zu messen wird von der Ansteuerungsvorrichtung 3 vorzugsweise während einem bestimmten Zeitabschnitt ein Mittelwert gebildet. Beide Sensoren 8, 15 sowie das Steuerventil 5 sind über Signalleitungen 8a, 15a, 5a mit der Ansteuerungsvorrichtung 3 verbunden. Das Steuerventil 5 kann beispielsweise Mittels einer Zeitsteuerung angesteuert werden, indem das Steuerventil 5 während einer vorgebbaren Zeitdauer geöffnet wird, um derart eine definierte Menge Öl der Ölkammer 2b zu- oder abzuführen. Die in Figur 1 dargestellte Anordnung könnte auch nur einen Temperatursensor 6 oder einen Drucksensor 7 aufweisen, sofern dies genügen würde um ein Korrekturvolumen Vk zu berechnen oder zu bestimmen. Als Gas wird beispielsweise Stickstoff verwendet, welches bis zu 1000 Bar komprimierbar ist. Eine Lage- bzw. Längenmesseinrichtung 16 ist über Signalleitungen 16b mit der Ansteuervorrichtung 3 verbunden. Es ist eine Vielzahl von Ausführungsformen für die Lagemessung bekannt. So kann z.B. eine Lagemessung direkt am oder im Hydrop 1 vorgenommen werden, oder die Lage kann durch Messen des Drehwinkels des Tragarmes bestimmt werden. Es könnte z.B. auch die Höhe des Kettenfahrzeuges ab Boden gemessen werden, und aus diesem Wert die Lage bzw. Länge des Hydrop 1 abgeleitet werden. Die Lagemessung 16 zusammen mit einer Druckmessung 7 dient zur Beurteilung der tatsächlichen Kennlinie in Abhängigkeit der Temperatur des Gases entsprechend Fig. 8a. Mit der Ansteuervorrichtung 3 und der Dosiervorrichtung 2 kann das Gasvolumen in der Gaskammer 1h derart nachgeführt werden, dass eine vorgegebene Kennlinie gemäss Fig. 8b immer unabhängig von der Temperatur des Gases eingestellt werden kann.

Figur 2 zeigt ein weiteres Ausführungsbeispiel eines Dosierzylinders 2 mit einem verschiebbar gelagerten Dosierkolben 2a, der ein Gas gefülltes Dosiervolumen 2c begrenzt. Ein elektrischer Antrieb 11 ist über eine Verbindungswelle 11a mit dem Dosierkolben 2a verbunden, um diesen in der mit einem Pfeil dargestellten Richtung zu bewegen. Der elektrische Antrieb 11 ist über eine elektrische Leitung 11c mit der Ansteuerungsvorrichtung 3 verbunden. Zudem umfasst der elektrische Antrieb 11 einen Drehwinkelsensor 11b, welcher ebenfalls über die elektrische Leitung 11c mit der Ansteuerungsvorrichtung 3 verbunden ist, und mit welchem die Lage $x_D$ des Dosierkolbens 2a messbar ist.

Die in Figur 3 dargestellte Federungsvorrichtung weist, im Unterschied zu der in Figur 1 dargestellten Federungsvorrichtung, vier Hydropfedern 1 auf, wobei jede Hydropfeder 1 mit einem Rad 12a, 12b, 12c, 12d verbunden ist, sowie einen Lagensensor 16 und gegebenenfalls einen Temperatursensor 6 und gegebenenfalls einen Drucksensor 7 aufweist. Jede einzelne Hydropfeder 1 kann über ein Steuerventil 4 und eine gemeinsame Speiseleitung 10 mit dem Dosierzylinder 2 verbunden werden. Jede Hydropfeder 1 sowie der Dosierzylinder 2 sind signalleitend mit der Ansteuerungsvorrichtung 3 verbunden, um die Steuerventile 4 der Hydropfedern 1 sowie den Dosierzylinder 2 durch die Ansteuervorrichtung 3 zu kontrollieren. Ein Fahrzeug könnte beispielsweise zwei, vier, sechs oder acht Räder 12a, 12b, 12c, 12d aufweisen, welche je über eine Hydropfeder 1 mit dem Fahrzeugrahmen des Fahrzeuges verbunden sind. So könnte beispielsweise ein geländegängiges Radfahrzeug auf jeder Seite vier in Fahrtrichtung hintereinander angeordnete Räder 12a, 12b, 12c, 12d mit Hydropfedern 1 aufweisen.

Für die Dosieraufgaben an den einzelnen Hydropelementen 1 können auch mehrere Dosiervorrichtungen 2 eingesetzt werden. Bevorzugt hat jedes Hydrop 1 eine eigene Dosiervorrichtung 2.

Die Lage- bzw. Längenmessung 16 erfolgt bevorzugt für jedes Hydrop 1 separat. Jede Messvorrichtung 16 ist über eine Signalleitung 16b mit der Ansteuervorrichtung 3 verbunden, wobei in Figur 3 nur eine der Signalleitungen 16b dargestellt ist. In einer einfacheren Ausführungsform genügt aber auch die Lagemessung 16 an wenigstens zwei Hydrops 1, z.B. am in Fahrtrichtung Vordersten und Hintersten Hydrop 1. Mit Hilfe dieser Messwerte kann die Lage bzw. Länge der dazwischen angeordneten Hydrops 1 durch Interpolation berechnet werden, sodass auch ein ungefährer Wert betreffend der Länge dieser dazwischen angeordneten Hydrops 1 zur Verfügung steht, sodass auch diese von der Dosiervorrichtung 2 mit einem Korrekturvolumen Gas Vk versorgt werden können.

Figur 4 zeigt schematisch ein Kettenlaufwerk eines Kettenfahrzeuges, wobei die umlaufende Kette 14 von den Rollen 12a, 12b, 12c, 12d sowie den Umlenkrollen 13a, 13b getragen ist. Die Umlenkrollen 13a, 13b werden bei Kettfahrzeugen auch als Leitrad beziehungsweise Treibrad bezeichnet. Die Rollen 12b, 12c sind über je eine Hydropfeder 1 mit einem gemeinsamen Laufwerkträger 17 verbunden und in der dargestellten Richtung verschiebbar gelagert. Die Räder 12a und 12d weisen keine Hydropfedern 1 auf und sind beispielsweise mit einer konventionellen mechanischen Feder mit dem Laufwerkträger 17 verbunden. Die Spannung der Kette 14 kann über die mit den Rollen 12b, 12c verbundenen Hydropfedern 1 beeinflusst werden. In einem weiteren Ausführungsbeispiel könnte beispielsweise nur die Umlenkrolle 13b oder zusätzlich auch die Rollen 12b, 12c mit einer Hydropfeder 1 verbunden sein, wobei die Rollen 12b, 12c, 13b in der dargestellten Richtung beweglich gelagert sind, um durch ein Ansteuern der Hydropfedern 1 die Spannung der Kette 14 und/oder die Fahrzeughöhe zu beeinflussen. In einer weiteren Ausführungsform sind alle Rollen 12a,12b,12c,12d jeweils über eine Hydropfeder 1 mit dem Laufwerkträger 17 verbunden, wobei zumindest eine der Hydropfedern 1 strömungstechnisch mit einer Dosiervorrichtung 2 verbunden ist und somit der Gaskammer 1h der Hydropfeder 1 ein Kompensationsvolumen zuführbar oder abführbar ist, wogegen die restlichen Hydropfedern 1 keine fluidleitende Verbindung zu einer Dosiervorrichtung 2 aufweisen, sodass der jeweiligen Gaskammer 1h dieser Hydropfedern 1 kein Kompensationsvolumen Vk zuführbar ist und diese Hydropfedern 1 nicht ansteuerbar sind.

In einer vorteilhaften Ausgestaltung umfassen auch diese nicht ansteuerbaren Hydropfedern 1 einen Temperatur- und/oder Drucksensor 6,7 zur Bestimmung der Temperatur und/oder des Druckes des Gases in der jeweiligen Gaskammer 1h. Bei der Berechnung des Kompensationsvolumens für die ansteuerbaren Hydropfedern 1 wird der Zustand der nicht ansteuerbaren Hydropfedern 1 über die Messung von deren Temperatur und/oder Druck berücksichtigt, und das Kompensationsvolumen derart berechnet, dass das Kettenfahrzeug insbesondere eine vorgegebene Höhe und/oder eine vorgegebene Kettenspannung aufweist.

Figur 6 zeigt eine Draufsicht auf ein Laufwerk 18, welches eine Mehrzahl von Rollen 12a, 12b, 12c, 12d, 12e und Umlenkrollen 13a, 13b umfasst, die mit einem gemeinsamen Laufwerkträger 17 verbunden sind, wobei die Rollen 12b und 12d über je eine Hydropfeder 1 mit dem gemeinsamen Laufwerkträger 17 verbunden sind. Alle anderen Rollen 12a, 12c, 12e sind über eine mechanische Feder wie ein Torsionsstab oder eine nicht ansteuerbare Hydropfeder 1 mit dem Laufwerkträger 17 verbunden. Alle Rollen zusammen bilden ein Kettenlaufwerk, auf welchem eine umlaufende Kette 14 aufliegt.

Es könnten auch die in Figur 3 dargestellten, einzelnen Räder 12a, 12b, 12c, 12d über die Hydropfedern 1 mit einem gemeinsamen Laufwerkträger 17 verbunden sein und derart ein Laufwerk ausbilden. Unter Laufwerk wird somit auch ein Fahrwerk mit Rädern verstanden.

In einer vorteilhaften Ausgestaltung bildet das in Figur 6 dargestellte Laufwerk 18 eine separate Einheit, und umfasst zudem noch den Dosierzylinder 2, sodass das Laufwerk 18, wie in Figur 5 dargestellt, das gesamte linke oder rechte Laufwerk eines Rad- oder Kettenfahrzeuges umfasst, wobei die beiden Laufwerke 18 beispielsweise von einer gemeinsamen Ansteuerungsvorrichtung 3 mit Steuerleitungen 3a ansteuerbar sind.

Figur 7 zeigt ein Ausführungsbeispiel der in Figur 1 vereinfacht dargestellten Hydropfeder 1. Ein Hebelarm 19 ist am Punkt 19a drehbar mit dem gemeinsamen Laufwerkträger 17 verbunden und am Punkt 19c mit dem Rad 12b verbunden. Die Hydropfeder 1 ist am Punkt 20 drehbar mit dem gemeinsamen Laufwerkträger 17 verbunden und am Punkt 19b drehbar mit dem Hebelarm 19 verbunden. Somit ist das Rad 12b bezüglich dem gemeinsamen Laufwerkträger 17 in vertikaler Richtung federn gelagert, wobei am Rad 12b eine Kraft F2 angreift, was in der Hydropfeder 1 eine Reaktionskraft F1 zur Folge hat.

Nachfolgend wird an Hand eines Ausführungsbeispiels beschrieben, wie der Gaskammer 1h ein Kompensationsvolumen Vk zu- oder abzuführen ist, damit die Hydropfeder 1 in einem Grundzustand temperaturunabhängig oder unabhängig von Temperaturschwankungen eine im wesentlichen konstante Auslenkung bzw. Länge aufweist. Für ein Fahrzeug, dessen Räder alle über je eine Hydropfeder 1 mit dem Fahrzeuggehäuse verbunden sind bedeutet dies, dass das Fahrzeug in einem Grundzustand eine im wesentlichen konstante Höhe aufweist, unabhängig von der Temperatur des Gases in der Gaskammer 1h der Hydropfeder 1. Unter dem Grundzustand wird beispielsweise eine Ruhelage beziehungsweise der Stillstand des Fahrzeuges verstanden. Dieser Zustand ist natürlich während der Fahrt des Fahrzeuges nicht gegeben, da die Hydropfedern 1 durch deren Aus- und Einfederung ständig bewegt werden. Das erfindungsgemässe Verfahren weist den Vorteil auf, dass eine Berechnung des Kompensationsvolumens auch während der Fahrt, beziehungsweise auch wenn sich das Fahrzeug nicht in einer Ruhelage befindet, durchgeführt werden kann, weil in einer bevorzugten Ausgestaltung als einzige erforderliche Messgrösse der Hydropfeder 1 die Temperatur bzw. der Druck des Gases in der Gaskammer zu messen ist, was natürlich auch während der Fahrt möglich ist.

Das Verfahren wird mit Hilfe der in Figur 1 dargestellten hydropneumatischen Federungsvorrichtung erläutert, wobei als Dosierzylinder 2 nicht der in Figur 1 dargestellt, sondern der in Figur 2 dargestellt verwendet wird. In den Figuren 1 und 2 sind die zum Verständnis des Verfahrens wichtigen Parameter dargestellt, welche sind:

1. Ausgangssituation

Parameter der Hydropfeder 1:

$p_H$:   Gasdruck in der Gaskammer 1h der Hydropfeder 1
$T_H$:   Gastemperatur in der Gaskammer 1h
$x_H$:   Position des Trennkolbens 1g beziehungsweise des Kolbens 1b
$V_H$:   Volumen der Gaskammer 1h,

$$V_H = \text{Querschnittsfläche der Gaskammer} * x_H .$$

Parameter des Dosierzylinders 2:

$p_D$:  Gasdruck im Dosiervolumen 2c des Dosierzylinders 2
$T_D$:  Gastemperatur im Dosiervolumen 2c
$x_D$:  Position des Dosierkolbens 2a
$V_D$:  Volumen des Dosiervolumens 2c,

$$V_D = \text{Querschnittsfläche des Dosierzylinders 2} * x_D .$$

Die folgenden Parameter werden mit Sensoren erfasst:

- Die Gastemperatur $T_H$ mit dem Temperatursensor 6
- Der Gasdruck $p_D$ mit dem Drucksensor 8
- Die Position $x_D$ mit dem Drehwinkelsensor 11b

2. Temperaturerhöhung des Gases in der Hydropfeder

Bei einer Temperaturerhöhung ändern sich die Parameter wie folgt (eine Temperaturerniedrigung würde die Parameter entgegengesetzt ändern):

Parameter der Hydropfeder 1:

$p_{H2}$:  Der Gasdruck bleibt konstant, da das Gesamtwicht des Fahrzeuges konstant bleibt.

$$p_{H2} = p_H .$$

$T_{H2}$:  Die Gastemperatur in der Gaskammer 1h ist höher als $T_H$.
$V_{H2}$:  Das Volumen der Gaskammer 1h ist höher und berechnet sich aus $V_{H2} = V_H * T_{H2}/T_H$
$X_{H2}$:  Die Position des Trennkolbens 1g vergrössert sich, wodurch das Verbindungsmittel 1a bewegt wird. Üblicherweise bewirkt dies eine Verlängerung der Hydropfeder. Die Gesamtlänge der in Figur 7 dargestellten Hydropfeder 1 zwischen den Drehpunkten 19b und 20 wird durch die Temperaturerhöhung um $\Delta x_{H2}$ verlängert.

$$\Delta x_{H2} = (V_{H2}-V_H)/ \text{Querschnittsfläche der Gaskammer}$$

$$x_{H2} = x_{H1} + \Delta x_{H2}$$

Parameter des Dosierzylinders 2:

$T_{D2}$:  Die Gastemperatur im Dosiervolumen 2c ist nicht bekannt
$p_{D2}$:  Gemessener Gasdruck im Dosiervolumen 2c, welcher auf Grund der höheren Temperatur $T_{D2}$ angestiegen ist.

$x_{D2}$:     Die Position des Dosierkolbens 2a ist unverändert $x_{D2}=x_D$
$V_{D2}$:     Das Volumen des Dosiervolumens 2c ist unverändert $V_{D2}=V_D$.

3. Erstellung einer Fluid leitenden Verbindung zwischen Gaskammer und Dosiervolumen.

Beim Öffnen des Steuerventils 4 ändern sich die Parameter wie folgt:

Parameter der Hydropfeder 1:

$p_{H3}$:   Der Gasdruck beleibt konstant,

$$p_{H3} = p_{H2}.$$

$T_{H3}$:   Die Gastemperatur bleibt konstant,

$$T_{H3} = T_{H2}$$

$V_{H3}$:   Das Volumen verändert sich durch einströmendes Gas aus dem Dosierzylinder 2,

$$\Delta V_{H3} = V_D - V_D * p_H/p_{D2}$$

$x_{H3}$:   Die Position des Trennkolbens 1g verändert sich $\Delta x_{H3} = \Delta V_{H3}$ / Querschnittsfläche der Gaskammer

$$x_{H3} = x_{H1} + \Delta x_{H2} + \Delta x_{H3}$$

Parameter des Dosierzylinders 2:

$T_{D3}$:   Die Gastemperatur im Dosiervolumen 2c ist nicht bekannt
$p_{D3}$:   Der gemessene Gasdruck im Dosiervolumen 2c, sinkt durch den Ausgleich,

$$p_{D3} = p_{H1}$$

$x_{D3}$:   Die Position des Dosierkolbens 2a ist unverändert

$$x_{D3}=x_D$$

$V_{D3}$:   Das Volumen des Dosiervolumens 2c ist unverändert

$$V_{D3} = V_D.$$

4. Berechnung des Kompensationsvolumens Vk

Parameter der Hydropfeder 1:

$p_{H4}$: Der Gasdruck beleibt konstant,

$$p_{H4} = p_{H2}.$$

$$p_{H4} = p_{H2}.$$

$T_{H4}$: Die Gastemperatur bleibt konstant,

$$T_{H4} = T_{H2}$$

$x_{H4}$: die zu erreichende Position des Trennkolbens 1g ist bekannt: $x_{H4} = x_{H1}$, es ist daher eine Verschiebung um $\Delta x_{H4} = -\Delta x_{H3} - \Delta x_{H2}$ erforderlich.

Parameter des Dosierzylinders 2:

$T_{D4}$: Die Gastemperatur im Dosiervolumen 2c ist nicht bekannt
$p_{D4}$: Der gemessene Gasdruck ist bekannt.

$$p_{D3} = p_{H1}.$$

$x_{D4}$: Die Zielposition des Dosierkolbens 2a wird berechnet. Die erforderliche Korrektur beträgt:

$$\Delta x_{D4} = -\Delta x_{H4} * \text{ Querschnittsfläche der Gaskammer } / \text{ Querschnittfläche Dosiervolumen}$$

Das erforderliche Kompensationsvolumen Vk ist

$$Vk = \Delta x_{D4} * \text{ Querschnittfläche Dosiervolumen der Hydropfeder}$$

5. Abführen des Kompensationsvolumens Vk

Der Dosierkolben 2a des Dosierzylinders 2 wird somit die Distanz $\Delta x_{D4}$ verfahren und der Hydropfeder das Kompensationsvolumen Vk entnehmen. Danach wird das Steuerventil 4 geschlossen, sodass die Gaskammer 1h vom Dosierzylinder 2 getrennt ist.

Senkt sich die Gastemperatur in der Gaskammer, so wird in analoger Weise ein Kompensationsvolumen Vk berechnet, und dieses der Hydropfeder zugeführt.

In einer vereinfachten Ausführungsform kann auf die Messung des Drucks im Dosierzylinder 2 verzichtet werden, was zur Folge hat, dass der Korrekturfaktor $\Delta V_{H3} = V_D - V_D * p_H/p_{D2}$ nicht berechnet werden kann und somit vernachlässigt werden muss. Trotzdem ist das Kompensationsvolumen Vk näherungsweise berechenbar.

Werden, wie in Figur 3 dargestellt, mehrere Hydropfedern 1 verwendet, so kann nacheinander für jede Hydropfeder 1 ein Kompensationsvolumen Vk berechnet werden, und dieses, durch eine entsprechende Ansteuerung der Steuerventile 4, jeder einzelnen Hydropfeder 1 individuell zu- oder abgeführt werden.

Es ist auch möglich alle Hydropfedern 1 gleichzeitig Fluid leitend mit dem Dosierzylinder 2 zu verbinden, um gleichzeitig allen Hydropfedern 1 ein Kompensationsvolumen Vk zu- oder abzuführen.

Bei einem Kettenfahrzeug sind die Hydropfedern 1 derart ansteuerbar, dass das Kettenfahrzeug in einer Ruhelage temperaturunabhängig dieselbe Höhe aufweist, was zur Folge hat, dass das Kettenfahrzeug in der Ruhelage temperaturunabhängig auch dieselbe Kettspannung aufweist. Es besteht natürlich die Möglichkeit dieses Korrektursystem abzuschalten wenn das Kettenfahrzeug nicht betrieben wird, z.B. während einem Stillstand über Nacht. Üblicherweise sinkt die Temperatur während der Nacht, sodass sich die Hydropfedern 1 zusammenziehen und der Aufbau oder Rahmen des Kettenfahrzeuges leicht nach unten sinkt, wobei sich auch die Kettspannung reduziert. Wenn das Kettenfahrzeug am nächsten Morgen wieder in Betrieb genommen wird kann die Temperatur des Gases in den Hydropfedern gemessen werden, und daraufhin den Hydropfedern ein Kompensationsvolumen zugeführt werden, sodass das Kettenfahrzeug wieder die vorgegebene Höhe und Kettenspannung aufweist. Während der anschliessenden Fahrt kann sich das Gas in der Hydropfeder relativ schnell erwärmen, sodass den Hydropfedern ein auf Grund der Temperaturmessung berechnetes Kompensationsvolumen entnommen wird, um die vorgegebene Höhe und/oder die Kettenspannung konstant oder in einem vorgegebenen Bandbereich zu halten. Die Gastemperatur der Hydropfeder wird somit insbesondere durch die Aussentemperatur sowie die beim Aus- und Einfedern entstehende Erwärmung beeinflusst.

In einer weiteren, vorteilhaften Ausführungsform ist eine Tabelle vorgegeben, in welcher das erforderliche Kompensationsvolumen Vk in Funktion der Temperatur des Gases in der Gaskammer der Hydropfeder aufgelistet ist. Bei diesem Verfahren muss zur Ermittlung des Kompensationsvolumens nur die Temperatur des Gases in der Hydropfeder gemessen werden, das erforderliche Kompensationsvolumen Vk aus der Tabelle ermittelt werden, und dieses der Hydropfeder 1 zu- oder abgeführt werden.

Das erfindungsgemässe Verfahren hat zur Folge, dass die Hydropfeder unabhängig von der Betriebstemperatur beziehungsweise von der Temperatur des Gases in der Gaskammer der Hydropfeder ein im wesentlichen konstantes Gasvolumen aufweist, sodass die Hydropfeder in einem Grundzustand, d.h. in Ruhelage, eine im wesentliche konstante Länge aufweist, unabhängig von der Temperatur des Gases.

Die hydropneumatische Federungsvorrichtung beziehungsweise das Fahrzeug kann Lagensensoren 16 umfassen, um beispielsweise einen Grundzustand der Federungsvorrichtung oder des Fahrzeuges zu erfassen. Der Lagensensor 16 kann beispielsweise, wie in Figur 1 dargestellt, die Länge der Ein- und Auslenkung der Hydropfeder 1 messen, oder wie in Figur 7 dargestellt, den Drehwinkel zwischen Fahrzeuggehäuse und Hebelarm 19 messen, woraus wiederum die in Fig. 1 mit $x_H$ und in Fig. 7 mit w bezeichnete Länge der Hydropfeder 1 ermittelt werden kann.

Figur 8a zeigt den Verlauf des Druckes P bzw. der Aufstandskraft F in der Gaskammer 1h der Hydropfeder 1 in Funktion der Länge w bei unterschiedlichen Gastemperaturen $T_1, T_R, T_3, T_4$. Dieser Verlauf ist vereinfacht dargestellt. Üblicherweise weist der Zusammenhang zwischen Druck P bzw. Aufstandskraft F und Länge w, auch als Kennlinie bezeichnet, ein Hystereseverhalten auf. Dieser Hystereseeffekt wird nachfolgend nicht berücksichtigt, indem vereinfacht der in Figur 8a dargestellte Zusammenhang angenommen wird. Das Hystereseverhalten könnte jedoch auch, wie in Figur 8b mit dem Kurvenverlauf $T_{H1}$ dargestellt, berücksichtigt werden. Dem Druck P äquivalent ist die gesamte an der Hydropfeder 1 anliegende Kraft F. Figur 8b zeigt einen vorgegebenen Zusammenhang bzw. eine vorgegebene Kennlinie zwischen Länge w der Hydropfeder 1 und Druck P in deren Gaskammer 1h für eine Referenztemperatur $T_R$. Der Gaskammer 1 wird nun derart Gas zu- oder abgeführt, dass die mit T1, T3 und T4 bezeichneten Kurven wie dargestellt verschoben werden, sodass dies mit der mit $T_R$ bezeichneten Kurve deckungsgleich oder im Wesentlichen deckungsgleich sind. Eine derart angesteuerte Hydropfeder 1 weist unabhängig von der Temperatur im Wesentlichen denselben vorgegebenen Zusammenhang bzw. dieselbe vorgegebene Kennlinie zwischen Länge w und Druck P auf.

In einer bevorzugten Ausführungsform wird die Länge w der Hydropfeder 1 wie in Figur 7 dargestellt gemessen, danach basierend auf der gemessenen Länge w mit Hilfe des in Figur 8b dargestellten, vorgegebenen Zusammenhanges ein Solldruckwert P bestimmt, und danach mit der Dosiervorrichtung 2 ein Kompensationsvolumen VK der Gaskammer 1h zugeführt, bis der Druck in der Gaskammer 1h dem Solldruckwert P entspricht. Dieses Verfahren weist den Vorteil auf, dass in der einfachsten Ausführungsform nur die Länge w zu messen ist, danach aus dem vorgegebenen Zusammenhang gemäss Fig. 8b der Solldruck zu bestimmen ist, und danach Gas der Gaskammer 1h zu- oder abzuführen ist, bis der Druck des Gases in der Kammer 2c oder in der Gaskammer 1h dem Solldruckwert entspricht. Es wird der Gaskammer 1h so lange Gas zu- oder abgeführt, beziehungsweise ein Kompensationsvolumen Vk zugeführt, bis der gemessene Druck dem Solldruckwert entspricht. Auf eine Messung der Temperatur kann somit verzichtet werden. Dieses Verfahren weist den Vorteil auf, dass eine derart kompensierte Hydropfeder 1 unabhängig von der Temperatur T denselben oder im Wesentlichen denselben Zusammenhang zwischen der Länge w und dem Druck P aufweist, was zur Folge hat, dass die Kettenspannung des Kettenfahrzeuges temperaturunabhängig ungefähr dieselbe Spannung aufweist.

Dieses Verfahren weist den weiteren Vorteil auf, dass jede Hydropfeder 1 unabhängig von deren jeweiligen Länge w kompensierbar ist. Die Hydropfedern 1 weisen je nach Stellung des Kettenfahrzeuges, zum Beispiel in einer Steigung oder an einem Abhang, unterschiedliche Längen w auf. Trotzdem kann jede Hydropfeder 1 kompensiert werden. Die Gaskammer 1h der jeweiligen Hydropfeder ist nur mit einem derartigen Druck P zu versehen, dass dieser, ausgehend vom jeweiligen Wert w, dem durch die in Figur 8b dargestellten Kurvenverlauf entspricht.

In einem vorteilhaften Verfahren werden bei einem Kettenfahrzeug während dem Betrieb, insbesondere während der Fahrt, unterschiedliche Höhen und/oder Kettspannungen vorgegeben und eingestellt, insbesondere in Abhängigkeit von der Beschaffenheit des Untergrundes, über welchen gefahren wird. So wird beispielsweise während der Fahrt durch ein schweres Gelände eine höhere Kettenspannung eingestellt als bei einer Fahrt durch ebenes Gelände, oder umgekehrt.

In einem weiteren vorteilhaften Verfahren wird das Kompensationsvolumen Vk derart berechnet, dass die Hydropfeder in einem Grundzustand unabhängig von Temperaturschwankungen eine vorgebbar definierte Auslenkung aufweist oder eine vorgebbar definierte Auslenkung einnimmt und diese Position unabhängig von Temperaturschwankungen beibehält.

**Patentansprüche**

1. Kettenfahrzeug umfassend eine Mehrzahl von Rädern (12a,12b,12c,12d), die mit einem gemeinsamen Laufwerkträger (17) verbunden sind, und an welchen eine umlaufende Kette (14) anliegt, wobei zumindest eines der Räder (12a,12b,12c,12d) über eine hydropneumatische Federungsvorrichtung federnd mit dem Laufwerkträger (17) verbunden ist, **dadurch gekennzeichnet, dass** die hydropneumatische Federungsvorrichtung zumindest eine Hydropfeder (1) mit einer Gaskammer (1h) umfasst, dass die Gaskammer (1h) über ein Steuerventil (4) strömungstechnisch mit einer Dosiervorrichtung (2) verbunden ist, dass ein Sensor (6,7) zur Bestimmung eines Wertes des Gases in der Gaskammer (1h) wie Temperatur und/oder Druck vorgesehen ist, dass eine Ansteuerungsvorrichtung (3), derart ausgestaltet ist, dass diese den Messwert des Sensors (6,7) erfasst, und basierend auf diesem Messwert die Dosiervorrichtung (2) und das Steuerventil (4) derart ansteuert, dass der Gaskammer (1h) ein Kompensationsvolumen (Vk) zu- oder abführbar ist, um derart die Spannung der Kette (14) zu beeinflussen, und dass die Hydropfeder (1) derart auf die Kette (14) einwirkend angeordnet und ansteuerbar ist, dass die Kette (14) in einem Grundzustand unabhängig von Temperaturveränderungen eine im wesentlichen konstante Spannung aufweist.

2. Kettenfahrzeug nach Anspruch 1 umfassend einen Drucksensor (8) zum Erfassen des Drucks der Dosiervorrichtung (2), und/oder umfassend einen Temperatursensor (15) zum Erfassen der Temperatur des Gases der Dosiervorrichtung (2), wobei die Sensoren (8,15) signalleitend mit der Ansteuervorrichtung (3) verbunden sind.

3. Kettenfahrzeug nach einem der vorhergehenden Ansprüche, **dadurch gekennzeichnet, dass** die Dosiervorrichtung (2) einen elektrischen Antrieb (11) umfasst, welcher die Dosiervorrichtung (2) antreibt und welcher mit der Ansteuerungsvorrichtung (3) signalleitend verbunden ist.

4. Kettenfahrzeug nach einem der vorhergehenden Ansprüche, **dadurch gekennzeichnet, dass** das Kettenfahrzeug oder die Hydropfeder (1) einen Lagesensor (16) umfasst, um die Länge der Hydropfeder (1) oder die Drehung der Hydropfeder (1) bezüglich einer Referenzlage zu messen.

5. Kettenfahrzeug nach einem der vorhergehenden Ansprüche, **dadurch gekennzeichnet, dass** zumindest zwei Hydropfedern (1) über je ein Steuerventil (4) strömungstechnisch mit der Dosiervorrichtung (2) verbunden sind.

6. Kettenfahrzeug nach einem der Ansprüche 4 bis 5, **dadurch gekennzeichnet, dass** in einer Speichervorrichtung ein vorgegebener Zusammenhang zwischen Länge der Hydropfeder (1) und Druck in deren Gaskammer (1h) gespeichert ist, dass die Ansteuerungsvorrichtung (3) ausgehend von der gemessenen Länge der Hydropfeder (1) und mit Hilfe des vorgegebenen Zusammenhanges einen Drucksollwert bestimmt, und dass von der Dosiervorrichtung (2) ein derartiges Kompensationsvolumen (Vk) der Gaskammer (1h) zu- oder abführbar ist, dass der Druck in der Gaskammer (1h) dem Drucksollwert entspricht.

7. Kettenfahrzeug nach einem der vorhergehenden Ansprüche, **dadurch gekennzeichnet, dass** der Gaskammer (1h) jeder Hydropfeder (1) individuell ein Kompensationsvolumen (Vk) zu- oder abführbar ist.

8. Verfahren zum Beeinflussen der Spannung einer umlaufenden Kette (14) eines Kettenfahrzeuges, wobei die umlaufende Kette (14) an Rädern (12a,12b,12c,12d) anliegt, und wobei die Räder (12a,12b,12c,12d) über eine hydropneumatische Federungsvorrichtung mit einem Laufwerkträger (17) verbunden sind, **dadurch gekennzeichnet, dass** die hydropneumatische Federungsvorrichtung eine Hydropfeder (1) mit einer Gaskammer (1h) umfasst, dass zumindest eine Hydropfeder (1), strömungstechnisch mit einer Dosiervorrichtung (2) verbindbar ist, dass ein Wert des Gases in der Gaskammer (1h) wie die Temperatur und/oder der Druck gemessen wird, dass in Abhängigkeit dieses gemessenen Wertes ein Kompensationsvolumen (Vk) der Gaskammer (1h) zu- oder abgeführt wird, und dass das Kompensationsvolumen (Vk) derart bestimmt wird, dass die Hydropfeder (1) in einem Grundzustand temperaturunabhängig eine im Wesentlichen konstante oder eine vorgebbar definierte Auslenkung aufweist.

9. Verfahren nach Anspruch 8, **dadurch gekennzeichnet, dass** die Länge (w) der Hydropfeder (1) sowie der in der Gaskammer (1h) anliegende Druck des Gases gemessen wird, dass ein Zusammenhang zwischen Länge (w) der Hydropfeder (1) und Druck des Gases vorgegeben wird, dass ausgehend von der gemessenen Länge (w) der Hydropfeder (1) und mit Hilfe des vorgegebenen Zusammenhangs ein Drucksollwert bestimmt wird, und dass der Gaskammer (1h) ein derartiges Kompensationsvolumen (Vk) zugeführt wird, dass der in der Gaskammer (1h) anliegende Druck dem Drucksollwert entspricht.

**10.** Verfahren nach einem der Ansprüche 8 bis 9, **dadurch gekennzeichnet, dass** eine Mehrzahl von Hydropfedern (1) einzeln oder gemeinsam fluidleitend mit der Dosiervorrichtung (2) verbindbar sind, und dass das Kompensationsvolumen (Vk) den Hydropfedern (1) einzeln nacheinander oder gemeinsam zugeführt oder entnommen wird.

**11.** Verfahren nach einem der Ansprüche 8 bis 10, **dadurch gekennzeichnet, dass** die Hydropfedern (1) derart mit einem Kompensationsvolumen (Vk) versorgt werden, dass das Kettenfahrzeug in einem Grundzustand eine im wesentlichen konstante Höhe aufweist, unabhängig von der Temperatur des Gases in der Gaskammer (1h) der Hydropfedern (1).

**12.** Verfahren nach einem der Ansprüche 8 bis 11, **dadurch gekennzeichnet, dass** die Hydropfedern (1) derart mit einem Kompensationsvolumen (Vk) versorgt werden, dass die Kette (14) unabhängig von Temperaturveränderungen eine im Wesentlichen konstante Spannung aufweist oder dass sich die Spannung der Kette (14) in einem vorgebbaren Spannungsbereich bewegt.

**13.** Verfahren nach einem der Ansprüche 8 bis 12; **dadurch gekennzeichnet, dass** während dem Betrieb unterschiedliche Höhen und/oder Kettspannungen eingestellt werden, insbesondere in Abhängigkeit von der Beschaffenheit des Untergrundes, über welchen gefahren wird.

**14.** Verfahren nach einem der Ansprüche 8 bis 13, **dadurch gekennzeichnet, dass** die Hydropfedern (1) bei der Inbetriebnahmen des Kettenfahrzeuges derart mit einem Kompensationsvolumen (Vk) versorgt werden, dass das Fahrzeug einen vorgebbaren Grundzustand, insbesondere eine vorgebbare Höhe und/oder Kettspannung aufweist.

**15.** Verfahren nach einem der Ansprüche 8 bis 14, **dadurch gekennzeichnet, dass** die Längen (w) von zumindest zwei Hydropfedern (1) gemessen werden, und dass die Länge (w) zumindest einer weiteren Hydropfeder (1) mit Hilfe der gemessenen Längen (w) berechnet wird.

**Claims**

**1.** Tracked vehicle including a plurality of wheels (12a, 12b, 12c, 12d) which are connected with a running gear support (18), and on which a circulating track (14) lies, with at least one of the wheels (12a, 12b, 12c, 12d) being resiliently connected to the running gear support (18) via a hydropneumatic suspension apparatus, **characterised in that** the hydropneumatic suspension apparatus includes at least one hydrospring (1) with a gas chamber (1h), that the gas chamber (1h) being connected flow-wise via a control valve (4) to a metering device (2), that a sensor (6, 7) for determining a value of the gas in the gas chamber (1h) such as the temperature and/or the pressure is provided, that a control device (3) being designed such that it detects the measured value of the sensor (6, 7) and, based on this measured value, controls the metering device (2) and the control valve (4) in such a way that a compensation volume (Vk) can be supplied to or extracted from the gas chamber (1h) in order to influence the tension of the track (14) in this way, and that the hydrospring (1) is arranged and controllable so that it acts on the track (14) in such a way that the track (14) has a substantially constant tension in a base state independent of temperature changes.

**2.** Tracked vehicle in accordance with claim 1, including a pressure sensor (8) for the determination of the pressure of the metering device (2) and/or including a temperature sensor (15) for the detection of the temperature of the gas of the metering device (2), with the sensors (8, 15) being connected in signal transmitting manner to the control device (3).

**3.** Tracked vehicle in accordance with one of the preceding claims, **characterized in that** the metering device (2) includes an electrical drive (11) which drives the metering device (2) and which is connected in a signal-conducting manner to the control device (3).

**4.** Tracked vehicle in accordance with one of the preceding claims, **characterized in that** the tracked vehicle or the hydrospring (1) includes a position sensor (16) in order to measure the length of the hydrospring (1) or the rotation of the hydrospring (1) relative to a reference position.

5. Tracked vehicle in accordance with one of the preceding claims, **characterized in that** at least two hydrosprings (1) are each connected flow-wise to the metering device (2) via a respective control valve (4).

6. Tracked vehicle in accordance with one of the claims 4 to 5, **characterized in that** a preset relationship between the length of the hydrospring (1) and the pressure in its gas chamber (1h) is stored in a storage device, **in that** the control device (3) determines, starting from the measured length of the hydrospring (1) and with the aid of the preset relationship, a desired pressure value and **in that** a compensation volume (Vk) is supplied to the gas chamber (1h) or extracted from it by the metering device (2) in such a way that the pressure in the gas chamber (1h) corresponds to the desired pressured value.

7. Tracked vehicle in accordance with one of the preceding claims, **characterized in that** a compensation volume (Vk) can be individually supply to or extracted from the gas chamber (1h) of each hydrospring (1).

8. Method for influencing the tension of a circulating track (14) of a tracked vehicle, wherein the circulating track (14) lies on wheels (12a, 12b, 12c, 12d) and wherein the wheels (12a, 12b, 12c, 12d) are connected to a running gear support (18) via a hydropneumatic suspension apparatus, **characterised in that** the hydropneumatic suspension apparatus includes a hydrospring (1) with a gas chamber (1h), that at least one hydrospring (1) can be connected flow-wise to a metering device (2), that a value of the gas in the gas chamber (1h), such as the temperature and/or the pressure, is measured, that a compensation volume (Vk) can be supplied to or extracted from the gas chamber (1h) in dependence on this measured value, and that the compensation volume (Vk) is determined in such a way that the hydrospring (1) has a substantially constant or a presetable defined deflection in a base state independent of temperature.

9. Method in accordance with claim 8, **characterized in that** the length (w) of the hydrospring (1) and also the pressure of the gas applied in the gas chamber (1h) is measured, **in that** a relationship between the length (w) of the hydrospring (1) and the pressure of the gas is preset, **in that** a desired pressure value is determined starting from the measured length (w) of the hydrospring (1) and with the aid of the preset relationship and **in that** a compensation volume (Vk) is supplied to the gas chamber (1h) in such a way that the pressure applied in the gas chamber (1h) corresponds to the desired pressure value.

10. Method in accordance with one of the claims 8 to 9, **characterized in that** a plurality of hydrosprings (1) are singly or jointly connectable in fluid-transmitting manner to the metering device (2) and **in that** the compensation volume (Vk) can be supplied to or extracted from the hydrosprings (1) individually one after the other or jointly.

11. Method in accordance with one of the claims 8 to 10, **characterized in that** the hydrosprings (1) are supplied with a compensation volume (Vk) in such a way that the tracked vehicle has a substantially constant height in a base state independent of the temperature of the gas in the gas chamber (1h) of the hydrosprings (1).

12. Method in accordance with one of the claims 8 to 11, **characterized in that** the hydrosprings (1) are supplied with a compensation volume (Vk) in such a way that the track (14) has a substantially constant tension independent of temperature changes or **in that** the tension of the track (14) moves in a predeterminable tension range.

13. Method in accordance with one of the claims 8 to 12, **characterized in that** different heights and/or track tensions are set during the operation, in particular in dependence on the nature of the terrain which is being travelled on.

14. Method in accordance with one of the claims 8 to 13, **characterized in that** the hydrosprings (1) are supplied with a compensation volume (Vk) on starting up the tracked vehicle in such a way that the vehicle has a preset base state, in particular a predeterminable height and/or track tension.

15. Method in accordance with one of the claims 8 to 14, **characterized in that** the length (w) of at least two hydrosprings (1) are measured and **in that** the length (w) of at least one further hydrospring (1) is calculated with the aid of the measured length (w).

**Revendications**

1. Véhicule chenillé comprenant une pluralité de roues (12a, 12b, 12c, 12d) qui sont reliées à un support de mécanisme de roulement commun (17) et sur lesquelles repose une chenille circulante (14), sachant qu'au moins une des roues (12a, 12b, 12c, 12d) est reliée à ressort au support de mécanisme de roulement (17) par l'intermédiaire d'un dispositif de suspension hydropneumatique, **caractérisé en ce que** le dispositif de suspension hydropneumatique comprend au moins un ressort hydropneumatique (1) pourvu d'un compartiment à gaz (1h), **en ce que** le compartiment à gaz (1h) est fluidiquement relié à un dispositif de dosage (2) par l'intermédiaire d'une soupape de commande (4), **en ce qu'**il est prévu un capteur (6, 7) pour déterminer une valeur du gaz dans le compartiment à gaz (1h), telle que la température et/ou la pression, **en ce qu'**un dispositif d'asservissement (3) est configuré de manière à détecter la valeur de mesure du capteur (6, 7) et à asservir le dispositif de dosage (2) et la soupape de commande (4), sur la base de cette valeur de mesure, de façon qu'un volume de compensation (Vk) puisse être apporté au compartiment à gaz (1) ou évacué de ce dernier, pour influer ainsi sur la tension de la chenille (14), et **en ce que** le ressort hydropneumatique (1) est disposé en agissant sur la chenille (14) de telle sorte, et peut être asservi de telle sorte, que la chenille (14) présente dans un état de base une tension essentiellement constante, indépendamment des variations de température.

2. Véhicule chenillé selon la revendication 1, comprenant un capteur de pression (8) pour détecter la pression du dispositif de dosage (2), et/ou comprenant un capteur de température (15) pour détecter la température du gaz du dispositif de dosage (2), sachant que les capteurs (8, 15) sont reliés en transmission de signaux au dispositif d'asservissement (3).

3. Véhicule chenillé selon l'une des revendications précédentes, **caractérisé en ce que** le dispositif de dosage (2) comprend un entraînement électrique (11) qui entraîne le dispositif de dosage (2) et qui est relié en transmission de signaux au dispositif d'asservissement (3).

4. Véhicule chenillé selon l'une des revendications précédentes, **caractérisé en ce que** le véhicule chenillé ou le ressort hydropneumatique (1) comprend un capteur de position (16) pour mesurer la longueur du ressort hydropneumatique (1) ou la rotation du ressort hydropneumatique (1) par rapport à une position de référence.

5. Véhicule chenillé selon l'une des revendications précédentes, **caractérisé en ce qu'**au moins deux ressorts hydropneumatiques (1) sont fluidiquement reliés au dispositif de dosage (2) par l'intermédiaire d'une soupape de commande respective (4).

6. Véhicule chenillé selon la revendication 4 ou 5, **caractérisé en ce qu'**une relation prédéfinie entre la longueur du ressort hydropneumatique (1) et la pression dans son compartiment à gaz (1h) est mémorisée dans un dispositif de mémorisation, **en ce que** le dispositif d'asservissement (3) détermine une valeur de consigne de pression en partant de la longueur mesurée du ressort hydropneumatique (1) et à l'aide de la relation prédéfinie, et **en ce que** le dispositif de dosage (2) peut apporter au compartiment à gaz (1h), ou évacuer de ce dernier, un volume de compensation (Vk) tel que la pression dans le compartiment à gaz (1h) corresponde à la valeur de consigne de pression.

7. Véhicule chenillé selon l'une des revendications précédentes, **caractérisé en ce qu'**un volume de compensation (Vk) peut être individuellement apporté à ou évacué du compartiment à gaz (1h) de chaque ressort hydropneumatique (1).

8. Procédé pour influer sur la tension d'une chenille circulante (14) d'un véhicule chenillé, sachant que la chenille circulante (14) repose sur des roues (12a, 12b, 12c, 12d) et sachant que les roues (12a, 12b, 12c, 12d) sont reliées à un support de mécanisme de roulement (17) par l'intermédiaire d'un dispositif de suspension hydropneumatique, **caractérisé en ce que** le dispositif de suspension hydropneumatique comprend au moins un ressort hydropneumatique (1) pourvu d'un compartiment à gaz (1h), **en ce qu'**au moins un ressort hydropneumatique (1) peut être fluidiquement relié à un dispositif de dosage (2), **en ce qu'**on mesure une valeur du gaz dans le compartiment à gaz (1h), telle que la température et/ou la pression, **en ce qu'**un volume de compensation (Vk) est apporté au compartiment à gaz (1) ou évacué de ce dernier en fonction de cette valeur mesurée, et **en ce que** le volume de compensation (Vk) est défini de telle sorte que le ressort hydropneumatique (1) présente dans un état de base, indépendamment de la température, une déflexion essentiellement constante ou définie de manière prescriptible.

9. Procédé selon la revendication 8, **caractérisé en ce qu'**on mesure la longueur (w) du ressort hydropneumatique (1) ainsi que la pression du gaz régnant dans la compartiment à gaz (1h), **en ce qu'**on prédéfinit une relation entre la longueur (w) du ressort hydropneumatique (1) et la pression du gaz, **en ce qu'**on détermine une valeur de consigne de pression en partant de la longueur mesurée (w) du ressort hydropneumatique (1) et à l'aide de la relation prédéfinie, et **en ce qu'**on apporte au compartiment à gaz (1h) un volume de compensation (Vk) tel que la pression régnant dans le compartiment à gaz (1h) correspond à la valeur de consigne de pression.

**10.** Procédé selon la revendication 8 ou 9, **caractérisé en ce qu'**une pluralité de ressorts hydropneumatiques (1) peuvent être fluidiquement reliés individuellement ou conjointement au dispositif de dosage (2), et **en ce que** le volume de compensation (Vk) est apporté aux ressorts hydropneumatiques (1), ou en est évacué, conjointement ou bien individuellement et successivement.

**11.** Procédé selon l'une des revendications 8 à 10, **caractérisé en ce que** les ressorts hydropneumatiques (1) sont alimentés d'un volume de compensation (Vk) de telle sorte que le véhicule chenillé présente dans un état de base une hauteur essentiellement constante, indépendamment de la température du gaz dans le compartiment à gaz (1h) des ressorts hydropneumatiques (1).

**12.** Procédé selon l'une des revendications 8 à 11, **caractérisé en ce que** les ressorts hydropneumatiques (1) sont alimentés d'un volume de compensation (Vk) de telle sorte que la chenille (14) présente une tension essentiellement constante indépendamment des variations de température, ou que la tension de la chenille (14) varie dans une plage de tension prescriptible.

**13.** Procédé selon l'une des revendications 8 à 12, **caractérisé en ce qu'**on règle pendant la marche différentes hauteurs et/ou tensions de chenille, notamment en fonction de la nature du sol sur lequel on circule.

**14.** Procédé selon l'une des revendications 8 à 13, **caractérisé en ce que** les ressorts hydropneumatiques (1) sont, lors de la mise en service du véhicule chenillé, alimentés d'un volume de compensation (Vk) de telle sorte que le véhicule présente un état de base prescriptible, notamment une hauteur et/ou une tension de chenille prescriptible.

**15.** Procédé selon l'une des revendications 8 à 14, **caractérisé en ce qu'**on mesure les longueurs (w) d'au moins deux ressorts hydropneumatiques (1), et **en ce qu'**on calcule la longueur (w) d'au moins un autre ressort hydropneumatique (1) à l'aide des longueurs mesurées (w).

**Fig.1**

**Fig.2**

**Fig.3**

**Fig.4**

Fig. 5

Fig. 6

Fig. 8a

Fig. 7

Fig. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1091905